# EUROPÄISCHE PATENTSCHRIFT

(11) **EP 1 400 499 B1**
(45) Veröffentlichungstag und Bekanntmachung des Hinweises auf die Patenterteilung: **13.06.2007**
(21) Anmeldenummer: 03020025.7
(22) Anmeldetag: 03.09.2003
(51) Int. Cl.: C04B 35/573, C04B 35/80

(54) **Faserverstärkte Verbundkeramik und Verfahren zu deren Herstellung**
Composite fibre-reinforced ceramic article and method for making same
Produit composite en céramique renforcée par des fibres et procédé de préparation

(30) Priorität: 13.09.2002 DE 10242566
(43) Veröffentlichungstag der Anmeldung: 24.03.2004
(73) Patentinhaber: SGL Carbon AG, 65203 Wiesbaden (DE)
(72) Erfinder: Benitsch, Bodo, 86647 Buttenwiesen (DE); Gruber, Udo, 86356 Neusäss (DE); Öttinger, Oswin, Dr., 86405 Meitingen (DE); Pfizmaier, Eugen, 86672 Thierhaupten (DE)

(56) Entgegenhaltungen:
- WO-A-94/15887
- DE-A- 19 861 035
- PATENT ABSTRACTS OF JAPAN vol. 2000, no. 24, 11. Mai 2001 (2001-05-11) & JP 2001 199767 A (NIPPON CARBON CO LTD), 24. Juli 2001 (2001-07-24)

## Beschreibung

Die Erfindung betrifft faserverstärkte Verbundkeramik mit einer Siliciumcarbid (SiC) und/oder Silicium (Si) enthaltenden Matrix sowie ein Verfahren zu deren Herstellung.

In der DE 197 10 105 A1 wird eine mit hochfesten Graphitkurzfasern verstärkte Verbundkeramik mit einer im wesentlichen aus SiC bestehenden Matrix beschrieben, auch C/SiC-Werkstoff genannt. Die Matrix des keramischen Verbundwerkstoffs wird im wesentlichen durch die Flüssigsilicierung eines Kohlenstoffvorkörpers mit einer Siliciumschmelze gebildet. Die verstärkenden Kurzfasern sind von mindestens zwei Hüllen aus graphitiertem Kohlenstoff umgeben, welcher durch die Carbonisierung und Graphitierung von Imprägniermitteln, insbesondere aus Kunstharz oder Pech, gebildet wird, wobei zumindest die äußerste Hülle durch Reaktion mit flüssigem Silicium zu Siliciumcarbid umgewandelt ist. Die zur Verstärkung eingesetzten Faserbündel werden erhalten, indem Faserprepregs mindestens einmal mit carbonisierbarem Imprägniermittel verdichtet und carbonisiert, graphitiert, sowie hierauf zu Kurzfaserbündeln aufgemahlen werden. Die aufgemahlenen Faserbündel werden mit Füllmitteln und Bindemitteln gemischt und zu Grünkörpern verpreßt, welche daraufhin carbonisiert und mit flüssigem Silicium infiltriert werden. Der hierdurch erhältliche Verbundwerkstoff weist ein quasiduktiles Bruchverhalten mit einer Bruchdehnung von ca. 0,25 bis 0,5 % auf. Die Dichte des Verbundwerkstoffs beträgt 2,27 g/cm³.

Durch das bekannte Verfahren ist es nicht möglich, die Dichte durch gesteigerte SiC-Bildung signifikant zu erhöhen, ohne die Bruchdehnung deutlich zu verringern. Für eine Reihe von Anwendungen ist aber eine hohe Dichte bzw. eine geringe Porosität bei gleichzeitig hoher Bruchdehnung oder bruchzähem Verhalten des C/SiC-Werkstoffs entscheidend. So sind bei Verwendung von Verbundwerkstoffen zum ballistischen Schutz, beispielsweise als geschoßhemmende Beschußplatten, eine geringe Porosität und ein hoher Keramikgehalt von Bedeutung, um eine geschoßbrechende Wirkung zu erzielen. Gleichzeitig ist auch eine hohe Bruchdehnung des Werkstoffs erwünscht, um beim Auftreffen der Geschosse Sprödbrüche zu verhindern. Weiterhin spielt bei Hochtemperaturanwendungen eine geringe Porosität bzw. eine hohe Dichte eine wichtige Rolle, da durch offene Poren Luft an die Kohlenstoffasern gelangen und diese oxidativ schädigen kann.

Es ist daher Aufgabe der Erfindung, einen Verbundwerkstoff bereitzustellen, der neben einer hohen Materialdichte gleichzeitig auch eine hohe Bruchzähigkeit aufweist, und ein Verfahren zu dessen Herstellung anzugeben.

Gegenstand der Erfindung ist ein Verfahren gemäß Anspruch 1, umfassend die Schritte:
a) Herstellung einer Mischung enthaltend Kohlenstoffasern, carbonisierbares Bindeharz und zusätzliches Kohlenstoffmaterial mit eine Rohdichte im Bereich von 0,7 bis 1,8 g/cm³, welches durch Pressen von expandiertem Graphit zu Folien und anschließendes Zerkleinern der Folien gebildet wurde
b) Pressen der Mischung zu einem faserverstärkten Grünkörper,
c) Carbonisieren des Grünkörpers zur Herstellung eines C/C-Körpers
d) Infiltration des C/C-Körpers mit einer Siliciumschmelze.

Unter der Rohdichte ist die geometrische Dichte zu verstehen, die durch das Messen der Masse eines genau gegebenen Probenvolumens erfolgt. Im folgenden ist unter Dichte generell die Rohdichte zu verstehen.

Das Verfahren zur Herstellung des mit Kohlenstoffasern verstärkten SiC-Keramikverbundwerkstoffs mit hoher Dichte und hoher Bruchdehnung sieht gemäß Schritt a) zunächst die Herstellung einer preßfähigen Mischung enthaltend Kohlenstoffasern, insbesondere Kohlenstoffaserbündel, carbonisierbares Bindeharz und zusätzliches Kohlenstoffmaterial vor.

Die Kohlenstoffaserbündel werden bevorzugt durch beschichtete Kohlenstoffkurzfasern gebildet, die typischerweise durch Polymer oder Kohlenstoff zu Bündeln zusammengehalten werden.

Als carbonisierbares Bindeharz werden bevorzugt Phenol- oder Furfurylalkoholharze eingesetzt.

Das zusätzliche Kohlenstoffmaterial hat die Aufgabe, sich als "Opfermaterial" als erstes bei der Siliciumschmelzinfiltration zu SiC umzusetzen. Bei dem Flüssigsilicierverfahren wird eine hohe SiC-Ausbeute angestrebt. Bisherigen Anstrengungen zur Erzielung hoher Verbundwerkstoffdichten lag die Annahme zugrunde, daß das Kohlenstoffmaterial einen möglichst hohen Kohlenstoffgehalt aufweisen muß, wie dieser beispielsweise bei Graphit vorliegt, um möglichst viel SiC ausbilden zu können.

Die von der Anmelderin durchgeführten Untersuchungen zeigten jedoch, daß sich Naturgraphit nicht in ausreichenden Mengen zusetzen ließ, um einen Körper mit hoher Dichte zu erzeugen. Die mit der Reaktion des Naturgraphits in SiC einhergehende starke Volumenzunahme des Reaktionsproduktes SiC gegenüber den Ausgangsstoffen Si und C führte nämlich bei höheren Graphitmengen zu einem Aufblähen oder Sprengen des Verbundwerkstoffkörpers, weil bei der Reaktion zwischen Naturgraphit und Silicium zu SiC eine starke Volumenzunahme von ca. 135 % stattfindet. Bei höheren Graphitmengen kann dieses Verhalten zu einer Geometrieveränderung oder gar Zerstörung des Formkörpers führen.

Es wurde erkannt, daß neben seiner chemischen Reaktivität insbesondere die Dichte des Kohlenstoffmaterials in dem zur Siliciumschmelzinfiltration vorgesehenen C/C-Körper für die Dichte der hieraus gebildeten SiC-Matrix und die Restporosität des keramischen Verbundwerkstoffs verantwortlich sind. Es wurde festgestellt, daß die Umwandlung des Kohlenstoffmaterials durch die Flüssigsilicierung nur dann zu dichtem SiC und der Füllung der Restporosität des hierdurch gebildeten C/SiC-Körpers führt, wenn die Dichte des Kohlenstoffmaterials innerhalb bestimmter Grenzen liegt. ErfindungsgemäB wird der preßfähigen Mischung zusätzliches Kohlenstoffmaterial mit einer mittleren Dichte im Bereich von 0,7 bis 1,8 g/cm³, bevorzugt 0,7 bis 1,6 g/cm³ und besonders bevorzugt 0,7 bis 1,3 g/cm³ zugesetzt. Die Dichte des erfmdungsgemäß geeigneten Kohlenstoffmaterials liegt folglich deutlich unterhalb der Dichte von Naturgraphit (2,25 g/cm³). Durch die Verwendung eines Kohlenstoffmaterials mit einer Dichte innerhalb des erfindungsgemäßen Bereichs ist außerdem sichergestellt, daß die Umwandlung in SiC zu keiner für den Verbundwerkstoff schädlichen Volumenzunahme führt.

Expandierter Graphit, vorzugsweise nach einer Zwischenverdichtung, weist eine Dichte auf, welche innerhalb des genannten Bereichs liegt. Ein weiterer Vorteil von expandiertem Graphit liegt in dessen hoher Reaktivität gegenüber der Siliciumschmelze, was zu gleichmäßiger Silicierung und kurzer Reaktionszeit führt. Der expandierte Graphit wird beispielsweise durch die thermische Zersetzung eines Graphit-Interkalationsprodukts gewonnen. Hierbei sind insbesondere die Verbindungen auf der Basis Graphit/Schwefelsäure, Graphit/Salpetersäure oder Graphit/Perchlorsäure von Bedeutung. Expandierter Graphit wird weiterhin durch kurzzeitiges Erhitzen von Graphitsalzen oder Graphit-Einlagerungsverbindungen wie Graphithydrogensulfaten oder Graphitnitraten oder Graphitperchloraten, wie beispielsweise in der Patentanmeldung EP 112 03 78 A1 beschrieben, in Form einer lockeren, wurmförmigen Substanz gewonnen. Durch Verdichten des expandierten Graphits können Graphitfolien oder -platten erzeugt werden. Diese Folien oder Platten aus expandiertem Graphit weisen eine Rohdichte von 0,7 bis 1,8 g/cm³ auf. Zerkleinert man den so vorverdichteten expandierten Graphit mit Hilfe einer Schneid-, Prall- oder Strahlmühle, erhält man ein gut verarbeitbares expandiertes Graphitpulver, welches sich feinverteilt und homogen in Preßmassen einmischen läßt. Die Rohdichte des zerkleinerten Pulvers weicht im allgemeinen nur unwesentlich von derjenigen der Graphitfolien ab.
Das zerkleinerte Pulver aus vorverdichtetem expandiertem Graphit weist typischerweise eine Schüttdichte im Bereich von 0,04 bis 0,18 g/cm³ auf. Bevorzugt wird ein Pulver mit einer Schüttdichte von 0,05 bis 0,14 und besonders bevorzugt von 0,06 bis 0,1 g/cm³ eingesetzt.

Unverdichtetes bzw. ungemahlenes Pulver aus expandiertem Graphit weist im Gegensatz hierzu im allgemeinen mit ca. 0,002 bis 0,008 g/cm³ eine wesentlich geringere Schüttdichte auf. Diese geringe Dichte macht eine Verarbeitung nach dem angegebenen Prozeß zur Herstellung von Verbundkeramiken außerordentlich schwierig.

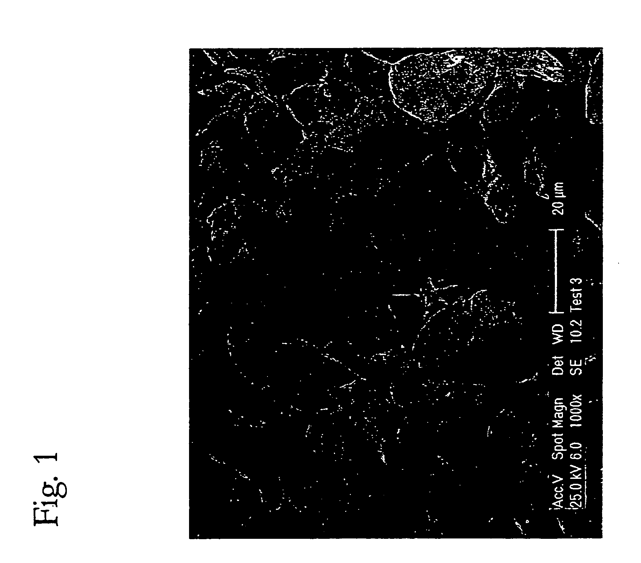

Besonders bevorzugt ist expandierter Graphit, welcher auf eine Dichte von ca. 1 g/cm³ vorverdichtet wurde. Die Vorverdichtung läßt sich beispielsweise durch Pressen zu Graphitfolien erreichen. Die Graphitfolien lassen sich ihrerseits sehr einfach zu einer definierten Partikelgröße zerkleinern. Die plättchenförmigen Partikel weisen ein Höhe/Durchmesser-Verhältnis von größer als 50, bevorzugt größer als 80 und besonders bevorzugt größer als 120 auf. Die Morphologie der bevorzugt eingesetzten plättchenförmigen Kohlenstoffpartikel mit einer Dichte von ca. 1 g/cm³ ist in Fig. 1 gezeigt.

Die geeignete mittlere Partikelgröße des zusätzlichen Kohlenstoffmaterials liegt unterhalb 500 µm, bevorzugt im Bereich von 0,1 bis 300 µm und besonders bevorzugt im Bereich von 0,1 bis 100 µm. Die Partikelgröße bezieht sich hierbei auf die agglomeratfreien Primärpartikel. Der Massenanteil an Kohlenstoffmaterial ist vorzugsweisekleiner als 45 % in der preßfähigen Mischung. Besonders bevorzugt sind Massenanteile im Bereich von 2 bis 35 %.

Die Formgebung der preßfähigen Masse gemäß Schritt b) erfolgt üblicherweise in einer Presse, wobei die Härtung der Masse thermisch oder katalytisch durchgeführt werden kann. Je nach Massekonsistenz können aber auch andere Druckformgebungsverfahren verwendet werden. Insbesondere der Zusatz an expandiertem Graphit führt zu einer vergleichsweise guten Gleit- und Fließfähigkeit der Masse, so daß sich auch Spritzguß oder verwandte Formgebungsverfahren durchführen lassen.

Der hierdurch erhaltene Grünkörper wird zur Herstellung des kohlenstoffhaltigen porösen Vorkörpers (C/C-Körper) gemäß Schritt c) bei Temperaturen im Bereich von ca. 750 bis 1200 °C unter Luftausschluß geglüht, beziehungsweise carbonisiert. Hierbei wird unter anderem das Binderharz zu Kohlenstoff zersetzt. Gegebenenfalls wird die Carbonisierung auch bis zu Temperaturen nahe 2400 °C durchgeführt. Bei diesen Temperaturen setzt die Graphitierung noch nicht graphitischen Kohlenstoffs ein.

Im letzten Verfahrensschritt d) wird der C/C-Körper nach den üblichen Verfahren, bevorzugt über Dochte, mit einer Siliciumschmelze infiltriert. Hierbei findet die Umwandlung zumindest eines Teils des Kohlenstoffs des C/C-Körpers zu SiC statt, wobei ein keramischer Verbundwerkstoff mit überwiegend aus SiC aufgebauter Matrix gebildet wird. Als weitere Matrixbestandteile treten im keramischen Verbundwerkstoff Restsilicium und Restkohlenstoff auf. Durch die Verwendung von expandiertem Graphit als bevorzugtes zusätzliches Kohlenstoffmaterial kann ein vergleichsweise geringer Gehalt an Restsilicium eingestellt werden. So liegt der Massenanteil an freiem Silicium (Restsilicium) im erfindungsgemäßen keramischen Verbundwerkstoff vorzugsweise unterhalb von 10 %. Für die Anwendung als ballistisches Schutzmaterial oder als Bestandteil von Panzerplatten wird der Massenanteil an Si bevorzugt auf weniger als 7 % eingestellt. Entsprechend dem geringen Gehalt an Restsilicium können vergleichsweise hohe SiC-Gehalte erreicht werden. Der keramische Verbundwerkstoff weist vorzugsweise einen Massenanteil an SiC von mehr als 60 % auf. Ein hoher SiC-Gehalt ist insbesondere bei den Anwendungen für den ballistischen Schutz von Bedeutung. Hier liegt der bevorzugte Massenanteil an SiC oberhalb von 70 %.

Darüber hinaus können außer Silicium weitere Metalle in der zur Infiltration vorgesehenen Siliciumschmelze vorhanden sein, beispielsweise wird Fe, Cr, W oder Mo verwendet, wobei deren Massenanteil in der Schmelze üblicherweise ca. 20 % nicht übersteigt. Besonders bevorzugt wird als weiteres carbidbildendes Metall Ti verwendet. Silicium wird im Rahmen dieser Anmeldung ebenfalls als Metall bezeichnet.

Der mit dem erfindungsgemäßen Verfahren herstellte keramische Verbundwerkstoff weist eine Dichte von mehr als 2,5 g/cm³ auf, wobei dieser Wert sich auf die Infiltration mit reinem Silicium bezieht. Bei Einsatz von Siliciumlegierungen mit einem Gehalt an Metallen höherer oder geringerer Dichte als der von Silicium sind diese Dichtebereiche den theoretischen Werten folgend sinngemäß anzupassen. Die offene Porosität des faserverstärkten keramischen Verbundwerkstoffs liegt unterhalb von 5 %, die Bruchdehnung beträgt mehr als 0,3 %. Der mit dem erfindungsgemäßen Verfahren hergestellte Verbundwerkstoff vereint daher in vorteilhafter Weise eine hohe Werkstoffdichte bzw. eine geringe Porosität mit einer relativ hohen Bruchzähigkeit.

Aufgrund der hohen Dichte bzw. der geringen Porosität ist der Verbundwerkstoff insbesondere für thermisch belastete Bauteile unter oxidierenden oder korrosiven Bedingungen gut geeignet. Die geringe Porosität verhindert nämlich das Eindiffundieren von Luft und die durch Luft hervorgerufene oxidative Schädigung der Kohlenstoff Verstärkungsfasern. Typische Anwendungsfelder sind daher auch Auskleidungen für Brennkammern oder Ofenräume.

Eine weitere Anwendung der erfindungsgemäßen faserverstärkten Verbundkeramik liegt im Gebiet der Panzerungsmaterialien. Bekanntermaßen eignen sich gerade keramische Werkstoffe gut als Plattenmaterial zur Panzerung und Schutz vor Geschossen. Gerade die hohe Werkstoffdichte des durch das erfindungsgemäße Verfahren hergestellten Verbundwerkstoffs resultiert in einer günstigen geschoßbrechenden Wirkung. Für die Anwendung zum ballistischen Schutz werden Materialdichten von mehr als 2,6 g/cm³ bevorzugt. Gegenüber monolithischen Keramiken weisen die erfindungsgemäßen faserverstärkten Keramiken außerdem eine wesentlich höhere Bruchzähigkeit auf.

Eine weitere Anwendung nutzt in vorteilhafter Weise die durch die hohe Werkstoffdichte hervorgerufene gute Polierbarkeit der Verbundwerkstoffoberflächen. Dabei ist vorgesehen, den keramischen Verbundwerkstoff bei der Herstellung von Spiegeln in Leichtgewichtsstrukturen, insbesondere in Satellitenspiegeln zu verwenden. Auf bisher übliche Beschichtungen der Spiegeloberflächen mit gut polierbaren Gläsern oder Silicium kann dann verzichtet werden.

Weitere Anwendungen finden sich als Komponenten für Präzisionsmaschinen und Eich- oder Kalibrierkörpem. Hier ist die sehr geringe und gleichmäßige thermische Ausdehnung über einen großen Temperaturbereich des erfindungsgemäßen Verbundwerkstoffs von entscheidender Bedeutung. Aufgrund der hohen Festigkeit, Steifigkeit und Verschleißfestigkeit kann der Verbundwerkstoff auch direkt als Strukturbauteil hochbelasteter Maschinenkomponenten eingesetzt werden.

### Beschreibung der Ausführungsbeispiele

In der Tabelle 1 sind die mechanischen Eigenschaften wie Bruchfestigkeit, Bruchdehnung und Dichte von nach dem erfindungsgemäßen Verfahren hergestellten Verbundkeramiken (Proben PF 413, 414, 450, 460) einer nicht nach diesem Verfahren erzeugten Verbundkeramik (Proben PF 420, 444) in Abhängigkeit der in der Mischung verwendeten Ausgangsstoffe und deren Menge gegenübergestellt.

Für die nach dem erfindungsgemäßen Verfahren hergestellten Proben PF 413, 414, 450 und 460 wurden jeweils kohlenstoffbeschichtete Kurzfaserbündel, Binderharz in Form von Phenolharz sowie expandierter Graphit mit einer Dichte von ca. 1 g/cm³ als zusätzliches Kohlenstoffmaterial zur Herstellung der Mischung verwendet. Die Proben unterschieden sich hinsichtlich der Menge von kohlenstoffbeschichteten Kurzfaserbündeln, von Kohlenstoffasern, von expandiertem Graphit sowie von Binderharz. Die unterschiedlichen Typen von Kurzfaserbündel (Typ A und Typ B) unterscheiden lediglich durch Filamentzahl und Morphologie der zur Faserbündelherstellung eingesetzten Faserstränge.

Die Proben PF 420 und 444 wurden mit Naturgraphit mit einer Dichte von 2,25 g/cm³ hergestellt. Wie bei den nach dem erfindungsgemäßen Verfahren hergestellten Proben wurden bei diesen Proben kohlenstoffbeschichtete Kurzfaserbündel verwendet.

Die Ergebnisse zeigen, daß sich durch den Zusatz von expandiertem Graphit eine Steigerung der Dichte des Verbundwerkstoffs gegenüber der Vergleichsprobe PF 420 (5 % Naturgraphit, 47 % Phenolharz) von 2,26 g/cm³ auf bis zu 2,75 g/cm³ einstellt, ohne daß sich die Bruchdehnung oder die Bruchfestigkeit reduziert. Die Vergleichsprobe PF 444 zeigt, daß sich diese Ergebnisse mit dem wesentlich dichteren Naturgraphit (Dichte 2,25 g/cm³) nicht erreichen lassen. Die Proben der Versuchsreihe PF 444 mit 10 % Naturgraphit wurden durch die Reaktion des Graphits zu SiC stark aufgebläht und teilweise völlig zerstört.

**Tabelle 1: Mechanische Eigenschaften der Proben in Abhängigkeit von Typ und Menge der Ausgangsstoffe**

| Probe Nr. PF ... | Kohlenstoff-Fasern | Kohlenstoffmaterial | Massenanteil von Kohlenstoffmaterial in % | Dichte Kohlenstoffmaterial in g/cm³ | Massenanteil Phenol-Harz in % | Bruch-Festigkeit in MPa | Bruchdehnung in % | Dichte in g/cm³ |
|---|---|---|---|---|---|---|---|---|
| 413 | Typ A 48 % | Expandierter Graphit | 4 | 1 | 48 | 44 | 0,25 | 2,56 |
| 414 | Typ A 50 % | Expandierter Graphit | 10 | 1 | 40 | 55 | 0,3 | 2,52 |
| 450 | Typ B 60 % | Expandierter Graphit | 10 | 1 | 30 | | | 2,60 |
| 460 | Typ B 55 % | Expandierter Graphit | 15 | 1 | 30 | | | 2,75 |
| 444 | Typ A 50 % | Naturgraphit | 10 | 2,25 | 40 | Probekörper aufgebläht und zerstört | | |

Die Ergebnisse werden ebenfalls durch die Abbildungen Fig. 1 bis Fig. 3 (Schliffbilder) erläutert. Dabei zeigen
Fig 1:
   Plättchenförmige Kohlenstoffpartikel einer Dichte von ca. 1 g/cm³
   Rasterelektronenmikroskopische Aufnahme
Fig 2:
   Vergleichsprobe ohne Zusatz von Kohlenstoffmaterial
   Das Schliffbild zeigt Bereiche aus Siliciumcarbid (1), Silicium (2), Kohlenstoffasern (3) und Poren (4)
Fig 3:
   Probe PF 460, hergestellt mit expandiertem Graphit
   Das Schliffbild zeigt Bereiche aus Siliciumcarbid (1), Silicium (2), Kohlenstoffasern (3) und Poren (4)

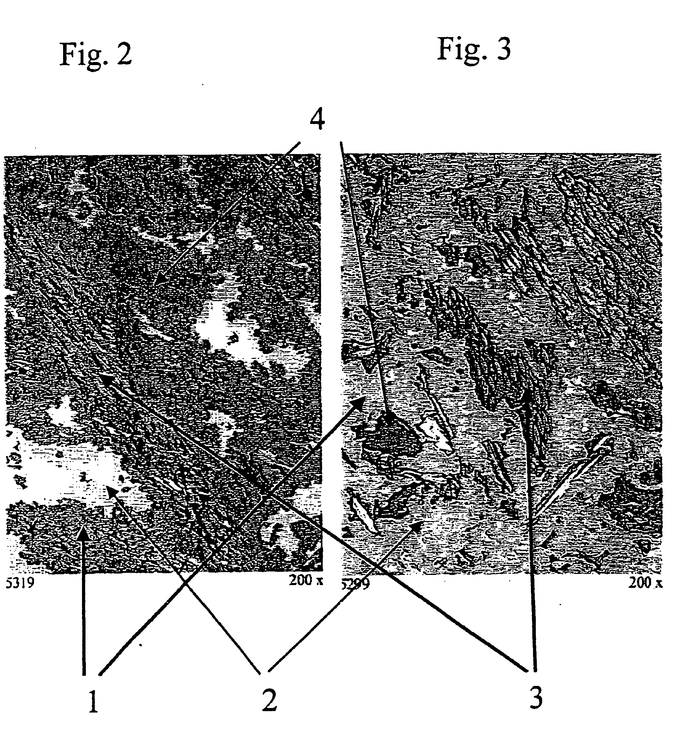

Der Einfluß des expandierten Graphits wird insbesondere durch einen Vergleich der Gefüge (Darstellung als Schliffbild) der C/SiC-Keramiken mit Graphitzusatz und ohne Zusatz von Kohlenstoffmaterial deutlich. Die Vergleichsprobe, Fig. 2, bei der gänzlich auf den Zusatz von Kohlenstoffmaterial verzichtet wurde, zeigt neben den Phasen aus SiC (1) und den Kohlenstoffasern oder -faserbündeln (3) noch vergleichsweise große Bereiche aus Si-Phasen (2) oder Poren (4), die beide für die geforderten Werkstoffeigenschaften unerwünscht sind.

Im Gegensatz hierzu weist die Probe PF 460 mit einem Zusatz an 15 % expandiertem Graphit, Fig. 3, nur noch sehr kleine Bereiche mit Si-Phasen (2) auf. Auch die Anzahl der Poren (4) und deren Querschnittsfläche ist hier deutlich reduziert. In vorteilhafter Weise werden die Kohlenstoffaserbündel fast ausnahmslos vollständig von einer dichten SiC-Matrix umhüllt.

### Bezugszeichenliste

- 1: Phasen von Siliciumcarbid
- 2: Phasen von Silicium
- 3: Kohlenstoffasern, Kohlenstoffaser-Bündel
- 4: Poren

## Patentansprüche

1. Verfahren zur Herstellung faserverstärkter Verbundkeramik mit einer SiC und/oder Si enthaltenden Matrix, umfassend die Schritte
a) Herstellung einer Mischung enthaltend Kohlenstofffasern, carbonisierbares Bindeharz und zusätzliches Kohlenstoffinaterial mit eine Rohdichte im Bereich von 0,7 bis 1,8 g/cm³, welches durch Pressen von expandiertem Graphit zu Folien und anschließendes Zerkleinern der Folien gebildet wurde
b) Pressen der Mischung zu einem faserverstärkten Grünkörper,
c) Carbonisieren des Grünkörpers zur Herstellung eines C/C-Körpers, und
d) Infiltration des C/C-Körpers mit einer Siliciumschmelze.

2. Verfahren nach Anspruch 1, **dadurch gekennzeichnet, dass** das zusätzliche Kohlenstoffmaterial vor den Kohlenstofffasern und dem carbonisierten Bindeharz als erstes mit dem Silicium im Verfahrensschritt d) reagiert.

3. Verfahren nach Anspruch 1, **dadurch gekennzeichnet, dass** das zusätzliche Kohlenstoffmaterial mit einem Massenanteil von 2 bis 35% in der Mischung des Verfahrensschritts a) eingesetzt wird.

4. Verfahren nach Anspruch 1, **dadurch gekennzeichnet, dass** als zusätzliches Kohlenstoffinaterial plättchenförmige Partikel eingesetzt werden.

5. Verfahren nach Anspruch 4, **dadurch gekennzeichnet, dass** plättchenförmige Parikel mit einer mittlere Partikelgrösse unterhalb von 500 µm eingesetzt werden.

6. Verfahren nach Anspruch 4, **dadurch gekennzeichnet, dass** plättchenförmige Partikel mit einem Höhe/Durchmesser-Verhältnis von größer als 50 eingesetzt werden.

7. Verfahren nach Anspruch 1, **dadurch gekennzeichnet, dass** der expandierte Graphit durch thermische Zersetzung von Interkalationsverbindungen aus Graphit und Schwefelsäure, Salpetersäure und/oder Perchlorsäure gebildet wird.

8. Verfahren nach Anspruch 1, **dadurch gekennzeichnet, dass** expandierter Graphit mit einer Rohdichte im Bereich von 0,7 bis 1,3 g/cm³ eingesetzt wird.

9. Verfahren nach Anspruch 1, **dadurch gekennzeichnet, dass** zerkleinertes Pulver aus vorverdichtetem expandiertem Graphit mit einer Schüttdichte von 0,04 bis 0,18 g/cm³ eingesetzt wird.

10. Verfahren nach Anspruch 1, **dadurch gekennzeichnet, dass** das zusätzliche Kohlenstoffmaterial unter den Pressbedingungen zur Herstellung des Grünkörpers höchstens bis zu einer Dichte von 1,6 g/cm³ nachverdichtet wird.

11. Verfahren nach Anspruch 1, **dadurch gekennzeichnet, dass** gebündelte Kohlenstofffasern mit einer mittleren Länge von weniger als 80 mm eingesetzt werden.

12. Verwendung von Verbundkeramik hergestellt gemäß dem Verfahren nach Anspruch 1 als Auskleidungsmaterial für Brennkammern oder Ofenräume.

13. Verwendung von Verbundkeramik hergestellt gemäß dem Verfahren nach Anspruch 1 als Schutzpanzerung gegen ballistische Einwirkungen oder Beschuss mit Projektilen.

14. Verwendung von Verbundkeramik hergestellt gemäß dem Verfahren nach Anspruch 1 zur Herstellung von spiegelnden Flächen.

15. Verwendung von Verbundkeramik hergestellt gemäß dem Verfahren nach Anspruch 1 zur Herstellung von Komponenten für Präzisionsmaschinen, Eich- oder Kalibrierkörpern.

## Claims

1. A process for the production of fibre-reinforced composite ceramics with a matrix containing SiC and/or Si, comprising the steps
a) production of a mixture containing carbon fibres, carbonisable binder resin and additional carbon material with a density of 0.7 to 1.8 g/cm³ which has been formed by compressing expanded graphite to foil and then comminuting the foil
b) compressing the mixture to a fibre-reinforced green body,
c) carbonising the green body to produce a C/C body, and
d) infiltration of the C/C body with a silicon melt.

2. A process according to Claim 1, **characterised in that** the additional carbon material is the first to react with the silicon in process step d), before the carbon fibres and the carbonised binder resin.

3. A process according to Claim 1, **characterised in that** the additional carbon material is used in the mixture of process step a) with a mass fraction of 2 to 35%.

4. A process according to Claim 1, **characterised in that** platelet-like particles are used as additional carbon material.

5. A process according to Claim 4, **characterised in that** platelet-like particles with an average particle size of less than 500 µm are used.

6. A process according to Claim 4, **characterised in that** platelet-like particles with a height/diameter ratio of more than 50 are used.

7. A process according to Claim 1, **characterised in that** the expanded graphite is formed by thermal decomposition of intercalation compounds of graphite and sulfuric acid, nitric acid and/or perchloric acid.

8. A process according to Claim 1, **characterised in that** expanded graphite with a density in the range of 0.7 to 1.3 g/cm³ is used.

9. A process according to Claim 1, **characterised in that** reduced powder of pre-compressed expanded graphite with a bulk density of 0.04 to 0.18 g/cm³ is used.

10. A process according to Claim 1, **characterised in that** the additional carbon material is recompressed at most up to a density of 1.6 g/cm³ under the compression conditions to produce the green body.

11. A process according to Claim 1, **characterised in that** bundled carbon fibres with an average length of less than 80 mm are used.

12. Use of composite ceramics produced in accordance with the process according to Claim 1 as lining material for combustion chambers or furnace chambers.

13. Use of composite ceramics produced in accordance with the process according to Claim 1 as protective shielding against ballistic effects or bombardment with projectiles.

14. Use of composite ceramics produced in accordance with the process according to Claim 1 for the production of reflective surfaces.

15. Use of composite ceramics produced in accordance with the process according to Claim 1 for the production of components for precision machines, gauging or calibration bodies.

## Revendications

1. Procédé de production de composite en céramique renforcé par fibres avec une matrice contenant du SiC et/ou du Si, comprenant les étapes suivantes :
a) préparation d'un mélange contenant des fibres de carbone, une résine de liaison carbonisable et une matière carbonée supplémentaire d'une densité apparente entre 0,7 et 1,8 g/cm³ formée par compression de graphite expansé en feuilles et par broyage des feuilles,
b) compression du mélange en une ébauche renforcée par fibres,
c) carbonisation de l'ébauche pour la préparation d'un corps C/C, et
d) infiltration du corps C/C avec une masse fondue de silicium.

2. Procédé selon la revendication 1,
**caractérisé en ce que**
la matière carbonée supplémentaire réagit la première avec le silicium dans l'étape d) avant les fibres de carbone et la résine de liaison carbonisée.

3. Procédé selon la revendication 1,
**caractérisé en ce que**
la matière carbonée supplémentaire est utilisée avec une fraction massique de 2 à 35 % dans le mélange de l'étape a).

4. Procédé selon la revendication 1,
**caractérisé en ce qu'**
on utilise comme matière carbonée supplémentaire des particules en forme de plaquettes.

5. Procédé selon la revendication 4,
**caractérisé en ce qu'**
on utilise des particules en forme de plaquettes d'une grosseur moyenne inférieure à 500 microns.

6. Procédé selon la revendication 4,
**caractérisé en ce qu'**
on utilise des particules en forme de plaquettes présentant un rapport hauteur / diamètre supérieur à 50.

7. Procédé selon la revendication 1,
**caractérisé en ce que**
le graphite expansé est formé par décomposition thermique de composés d'intercalement constitués de graphite et d'acide sulfurique, acide nitrique et/ou acide perchlorique.

8. Procédé selon la revendication 1,
**caractérisé en ce qu'**
on utilise un graphite expansé d'une densité apparente de 0,7 et 1,3 g/cm³.

9. Procédé selon la revendication 1,
**caractérisé en ce qu'**
on utilise une poudre obtenue par broyage à partir de graphite expansé pré-comprimé d'une densité en vrac de 0,04 à 0,18 g/cm³.

10. Procédé selon la revendication 1,
**caractérisé en ce que**
la matière carbonée supplémentaire est post-comprimée dans les conditions de compression appliquées pour la production de l'ébauche, au maximum jusqu'à une densité apparente de 1,6 g/cm³

11. Procédé selon la revendication 1,
**caractérisé en ce qu'**
on utilise des fibres de carbone en faisceaux d'une longueur moyenne inférieure à 80 mm.

12. Utilisation de composite en céramique produit par le procédé selon la revendication 1, comme matière de revêtement pour chambres de combustion ou fours.

13. Utilisation de composite en céramique produit par le procédé selon la revendication 1, comme blindage de protection contre les effets balistiques ou le tir de projectiles.

14. Utilisation de composite en céramique produit par le procédé selon la revendication 1, pour la production de surfaces réfléchissantes.

15. Utilisation de composite en céramique produit par le procédé selon la revendication 1, pour la fabrication de composants pour machines de précision, corps d'étalonnage ou de calibrage.
